# EUROPEAN PATENT APPLICATION

(11) **EP 3 641 319 A1**
(43) Date of publication of application: **22.04.2020**
(21) Application number: 18200644.5
(22) Date of filing: 16.10.2018
(51) Int. Cl.: H04N 21/414, H04N 21/422, H04N 21/4223, H04N 21/431, H04N 21/4415, G06F 3/01

(54) **DISPLAYING CONTENT ON A DISPLAY UNIT**

(71) Applicant: Koninklijke Philips N.V., 5656 AG Eindhoven (NL)
(72) Inventor: GODLIEB, Robert, 5656 AE Eindhoven (NL); VAN DALEN, Jan, 5656 AE Eindhoven (NL)
(74) Representative: de Haan, Poul Erik

(57) **Abstract**

The invention discloses an apparatus (100) for displaying content on a display unit, the apparatus comprising: a processor (102) configured to receive a signal indicative of a position of a user in a first position of a plurality of defined positions relative to the display unit; and operate the display unit to display user-configurable content in a first display location of a plurality of defined display locations of the display unit, based on the received signal. A method and a computer program product are also disclosed.

## Description

### FIELD OF THE INVENTION

The invention relates to displaying content on a display unit and, in particular, to displaying content at a particular location on a display unit based on a received signal. The invention also relates to a method of displaying content on a display unit.

### BACKGROUND OF THE INVENTION

With the advancement of technology, it is possible to manufacture larger and larger display screens, and it is possible for multiple information elements, images or video streams to be displayed on a single display screen concurrently, for example in a domestic setting.

One area in which large display screens are used is in the field of interactive mirrors, also referred to as smart mirrors. An interactive mirror is a unit which, in addition to functioning as a mirror to show a user his or her reflection, is also capable of displaying information to the user. Information, such as text, images and videos, may be displayed on a display portion of the interactive mirror which may, for example, be positioned behind a mirrored (or partially-mirrored) panel or a mirrored (or partially-mirrored) surface. In this way, the display screen, or portions thereof, may be visible through the mirror portion, so that a user is able to simultaneously view their reflection and information presented on the display screen.

### SUMMARY OF THE INVENTION

In some settings, a user or viewer of a display screen may be positioned relative to the display screen in such a position that they may find it difficult to view some content displayed on thereon, particularly if the user is positioned at one end of the display screen and the content is displayed at the other end of the display screen, for example. Thus, it would be useful to have a display screen on which content may be displayed conveniently according to the position of the user of the display screen.

It has been recognised that an improved viewing experience may be achieved if a display screen, such as a display unit of an interactive mirror, is able to display content at particular locations on a display area of the screen, based on the position of a user of the screen. For example, displaying content on a display screen or display unit in a position directly in front of the user may make it easier for the user to view and consume the content. According to embodiments disclosed herein, an apparatus may cause content to be displayed on a display unit in one of a plurality of defined display locations on the screen. The location at which the content is to be presented may be based on a received signal indicating a position of the user.

According to a first aspect, various embodiments provide an apparatus for displaying content on a display unit, the apparatus comprising a processor. The processor is configured to receive a signal indicative of a position of a user in a first position of a plurality of defined positions relative to the display unit; and operate the display unit to display user-configurable content in a first display location of a plurality of defined display locations of the display unit, based on the received signal.

By providing a number of defined or discrete display locations of the display unit, and displaying the content in one of the display locations based on the position of the user, the content can be displayed in a location that makes it convenient for the user to view the content and in a location relevant to the actions being performed by the user. Furthermore, since the content can be displayed only in the defined/discrete display locations, small movements by the user will not cause the content to move around the display in small increments, which may make the content appear to jitter. Rather, the content is displayed stably to permit easy viewing. If the user were to move from one defined position to another defined position, then the apparatus may cause the content to move to a display location corresponding to the user's new position. However, by limiting the number of display locations and corresponding user positions, the display of content on the display unit is restricted to locations corresponding to positions where a user is likely to be positioned.

In some embodiments, the processor may be further configured to determine an identity of the user based on the received signal. In this way, user-specific content may be displayed to each user.

The apparatus may, in some embodiments, further comprise one or more sensors for detecting the position of the user in the first position of the plurality of defined positions relative to the display unit. The processor may be configured to receive the signal indicative of the position of the user from the one or more sensors.

In some embodiments, at least one sensor of the one or more sensors may comprise a camera.

At least one sensor of the one or more sensors may comprise a touch-sensitive element associated with the display unit. The processor may be configured to operate the display unit to display user-configurable content in the first display location of the plurality of defined display locations of the display unit, based on a touch event received from the user by the touch-sensitive element. In this way, a user may interact with the apparatus and/or the display unit in an easy and simple way, and content may be displayed on the display unit at a display location corresponding to a location of the touch event.

The processor may, in some embodiments, be configured to determine, based on the received signal, that the user is facing the display unit. The processor may be further configured to operate the display unit to display the user-configurable content in the first display location of the plurality of defined display locations of the display unit, responsive to determining that the user is facing the display unit. If the processor determines that a user is not facing the display unit, then it may be assumed that they do not need to view the content. Thus, while the user's presence may be detected, content may not be displayed if the user's face cannot be detected.

In some embodiments, the processor may be configured to receive data indicative of the plurality of defined positions relative to the display unit. The processor may be further configured to store the data in a storage device associated with and accessible by the processor. This may be considered to be a calibration process, whereby the defined positions where users may be most likely to stand when using the display unit can be set. Display locations corresponding to the user positions on the display unit may also be set.

According to some embodiments, the user may comprise a first user, and the received signal may comprise a first signal. The processor may be configured to receive a second signal indicative of a position of a second user in a second position of the plurality of defined positions relative to the display unit. The processor may be further configured to operate the display unit to display user-configurable content in a second display location of the plurality of defined display locations of the display unit, based on the received second signal. In this way, multiple users may view content on a single display unit. Different users may view the same (common) content or different content which, in some examples, may be user-specific content.

In some embodiments, the apparatus may comprise an interactive mirror.

According to a second aspect, various embodiments provide a method for displaying content on a display unit, the method comprising receiving, by a processor, a signal indicative of a position of a user in a first position of a plurality of defined positions relative to the display unit; and displaying user-configurable content in a first display location of a plurality of defined display locations of the display unit, based on the received signal.

In some embodiments, the method may further comprise receiving, by a processor, a further signal indicative of the position of the user in a second position of the plurality of defined positions relative to the display unit. The method may further comprise transitioning the displayed user-configurable content from the first display location of the plurality of defined display locations of the display unit to a second display location of the plurality of defined display locations of the display unit.

The method may, in some embodiments, further comprise identifying the user based on the received signal. Said displaying may comprise displaying user-configurable content relevant to the identified user.

In some embodiments, the method may further comprise configuring the display unit. Configuring may comprise receiving, by a processor, data indicative of the plurality of defined positions relative to the display; and storing the data in a storage device associated with and accessible by the processor.

The user may comprise a first user, and the received signal may comprise a first signal. In some embodiments, the method may further comprise receiving, by a processor, a second signal indicative of a position of a second user in a second position of the plurality of defined positions relative to the display unit. The method may further comprise displaying user-configurable content in a second display location of the plurality of defined display locations of the display unit, based on the received second signal.

According to a third aspect, various embodiments provide a computer program product comprising a non-transitory machine-readable medium, the machine-readable medium having machine-readable code embodied therein, the machine-readable code being configured such that, on execution by a suitable computer or processor, the computer or processor is caused to perform the methods disclosed herein.

These and other aspects of the invention will be apparent from and elucidated with reference to the embodiments described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a schematic illustration of an example of an apparatus according to various embodiments;
Fig. 2 is a plan view of an example of a display unit in a bathroom setting;
Fig. 3 is an illustration of an example of a display unit according to various embodiments;
Fig. 4A is an illustration of a further example of a display unit according to various embodiments;
Fig. 4B is an illustration of a further example of a display unit according to various embodiments;
Fig. 5A is an illustration of a further example of a display unit according to various embodiments;
Fig. 5B is an illustration of a further example of a display unit according to various embodiments;
Fig. 6A is an illustration of an example of a user using a display unit;
Fig. 6B is an illustration of an example of two users using a display unit;
Fig. 6C is an illustration of a further example of two users using a display unit;
Fig. 7A is an illustration of an example of a display unit according to various embodiments;
Fig. 7B is an illustration of a further example of a display unit according to various embodiments;
Fig. 8 is a flowchart of an example of a method for displaying content on a display unit, according to various embodiments;
Fig. 9 is a flowchart of a further example of a method for displaying content on a display unit, according to various embodiments; and
Fig. 10 is a simplified schematic illustration of a processor in communication with a machine-readable medium.

### DETAILED DESCRIPTION OF THE EMBODIMENTS

Embodiments disclosed herein provide an apparatus for displaying content on a display unit in such a way that the content is presented conveniently for a user based on their position relative to the display unit. The content may, for example, be presented at a particular location on the display unit based on a detected position of a user or viewer relative to the display unit.

According to some embodiments disclosed herein, the display unit may comprise, or form at least part of, an interactive mirror, or smart mirror. For example, the display unit may form the display screen of an interactive mirror, such that a user is able to see their reflection in the reflective portion of the interactive mirror, and, at the same time, view content (e.g. information) presented on the display screen. Some examples are described in the context of a large interactive mirror intended for use by multiple people at the same time. For example, in some arrangements described herein, a display unit (e.g. an interactive mirror) may be positioned relative to two sinks or vanity units, such that a user of a first sink (e.g. a left-hand sink) is positioned in front of one part (e.g. a left-hand part) of the display unit and a user of the a second sink (e.g. a right-hand sink) is positioned in front of another part (e.g. a right-hand part) of the display unit. In a general case, a detection may be made of the position of a user relative to the display unit (e.g. whether the user is positioned in front of the left-hand sink or the right-hand sink), and content is presented on the relevant portion (e.g. the corresponding portion) of the display unit.

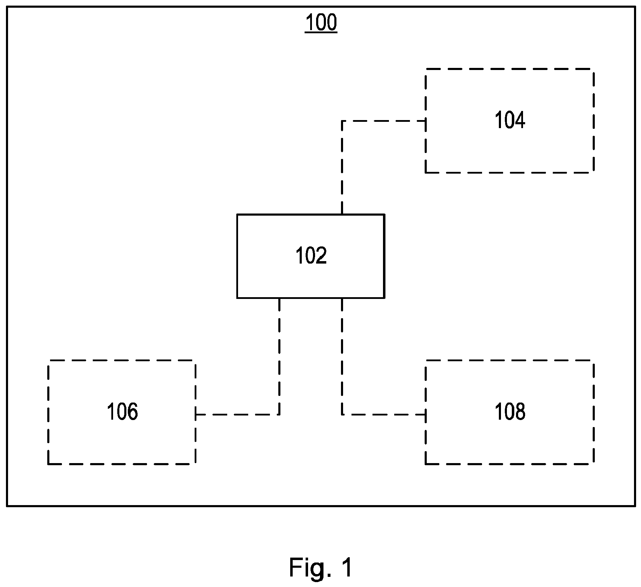

According to a first aspect, embodiments disclosed herein provide an apparatus for displaying content on a display unit. Referring to the drawings, Fig. 1 shows a block diagram of an apparatus 100 that can be used for displaying content on a display unit. The apparatus may, for example, form part of the display unit, or be in operative communication with the display unit. For example, the apparatus may comprise a computing unit or controller for operating a display unit. With reference to Fig. 1, the apparatus 100 comprises a processor 102 that controls the operation of the apparatus 100 and that can implement the methods described herein. The apparatus 100 may further comprise a memory 106 comprising instruction data representing a set of instructions. The memory 106 may be configured to store the instruction data in the form of program code that can be executed by the processor 102 to perform the methods described herein. In some implementations, the instruction data can comprise a plurality of software and/or hardware modules that are each configured to perform, or are for performing, individual or multiple steps of the method described herein. In some embodiments, the memory 106 may be part of a device that also comprises one or more other components of the apparatus 100 (for example, the processor 102 and/or one or more other components of the apparatus 100). In alternative embodiments, the memory 106 may be part of a separate device to the other components of the apparatus 100. For example, the apparatus 100 may be implemented as part of a cloud computing environment.

The processor 102 of the apparatus 100 can be configured to communicate with the memory 106 to execute the set of instructions. The set of instructions, when executed by the processor 102 may cause the processor to perform steps of the methods described herein. The processor 102 can comprise one or more processors, processing units, multi-core processors or modules that are configured or programmed to control the apparatus 100 in the manner described herein. In some implementations, for example, the processor 102 may comprise a plurality of processors, processing units, multi-core processors and/or modules configured for distributed processing. It will be appreciated by a person skilled in the art that such processors, processing units, multi-core processors and/or modules may be located in different locations and may each perform different steps and/or different parts of a single step of the methods described herein.

In some embodiments, as illustrated in Fig. 1, the apparatus 100 may comprise at least one user interface 104 configured to receive any of the user inputs described herein. The user interface may, for example, form part of, or cooperate with, the display unit (not shown in Fig. 1). The user interface 104 may allow a user of the apparatus 100 to manually enter instructions, data, or information relating to the method described herein. In some embodiments, the user interface 104 may be used to present content to a user. The user interface 104 may be any type of user interface that enables a user of the apparatus 100 to provide a user input, interact with and/or control the apparatus 100. For example, the user interface 104 may comprise one or more switches, one or more buttons, a keypad, a keyboard, a mouse, a touch screen, a microphone or an application (for example, on a tablet or smartphone), or any other user interface, or combination of user interfaces that enables the user to provide data to the apparatus and/or via which the user can consume information from the apparatus 100.

In some embodiments, the user interface 104 (or another user interface of the apparatus 100) may enable rendering (or output or display) of information, data or signals to a user of the apparatus 100. As such, a user interface 104 may be for use in providing a user of the apparatus 100 with information relating to or resulting from the method according to embodiments herein. The processor 102 may be configured to control one or more user interfaces 104 (e.g. the display unit) to provide information resulting from the method according to embodiments described herein. For example, the processor 102 may be configured to control one or more user interfaces 104 to render (or output or display) data using the methods described herein and/or any other outputs of the methods described herein. The user interface 104 may, in some embodiments, comprise a display screen, a graphical user interface (GUI) or other visual rendering component, one or more speakers, one or more microphones or any other audio component, one or more lights, a component for providing tactile feedback (e.g. a vibration function), or any other user interface, or combination of user interfaces for providing information relating to, or resulting from the method, to the user. In some embodiments, the user interface 104 may be part of a device that also comprises one or more other components of the apparatus 100 (for example, the processor 102, the memory 106 and/or one or more other components of the apparatus 100). In alternative embodiments, the user interface 104 may be part of a separate device to the other components of the apparatus 100.

In some embodiments, as illustrated in Fig. 1, the apparatus 100 may also comprise a communications interface (or circuitry) 108 for enabling the apparatus 100 to communicate with any interfaces, memories and devices that are internal or external to the apparatus 100. The communications interface 108 may communicate with any interfaces, memories and devices wirelessly or via a wired connection. For example, the communications interface 108 may receive the signal indicative of the position of the user, and forward the signal to the processor 102.

It will be appreciated that Fig. 1 shows the components required to illustrate this aspect of the disclosure and, in a practical implementation, the apparatus 100 may comprise other components in addition to those shown. For example, the apparatus 100 may comprise a battery or other power supply for powering the apparatus 100 or means for connecting the apparatus 100 to a mains power supply.

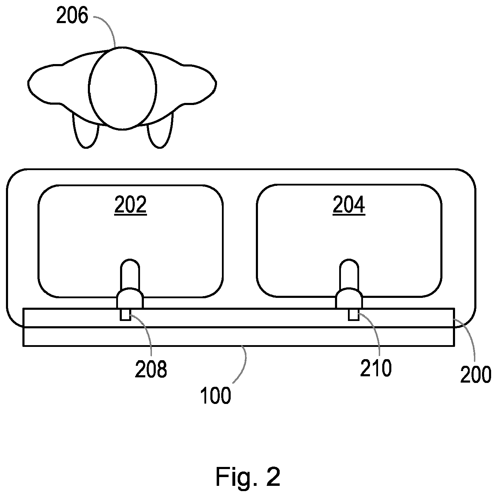

Fig. 2 is a plan view of an example of a display unit 200 installed in the bathroom setting. The display unit 200, in this example, is mounted (e.g. to a wall) above a dual sink unit which includes a first sink 202 and a second sink 204. The apparatus 100 is operatively coupled to the display unit 200. For example, the apparatus 100 may form part of the display unit 200. It will be appreciated that the position of the apparatus 100 shown in Fig. 2 is for illustrative purposes only. The display unit 200 may be used to present content to a user 206. In the example shown, the user 206 is positioned in front of the first sink 202. Thus, the defined positions in which a user may be detected may correspond to or be based on one or more fixtures and/or fittings (e.g. a sink, a tap, a workstation, dressing table, and the like) in the environment in which the apparatus and/or the display unit is installed. More generally, the plurality of defined positions may correspond to user activity position. A user activity position may, for example, be considered to be a position at which a user would be positioned while performing a particular activity (e.g. performing a personal care activity). The apparatus 100 and or the display unit 200 may comprise a first sensor 208 and a second sensor 210, the sensors being capable of detecting a user 206. For example, the first sensor 208 may detect the user 206 when the user is positioned in front of the first sink 202, and the second sensor 210 may detect the user when the user is positioned in front of the second sink 204. In some embodiments, a single sensor may be used to detect the user 206 when the user is positioned in front of either sink 202, 204. The sensor(s) 208, 210 will be discussed in greater detail below.

As noted above, the processor 102 is configured to perform steps of the methods described herein. In some embodiments, a memory (e.g. the memory 106) may be configured to store a set of instructions which, when executed by the processor 102 of the apparatus 100, cause the processor 102 to perform steps or functions as discussed below. The processor 102 is configured to receive a signal indicative of a position of a user (e.g. the user 206) in a first position of a plurality of defined positions relative to the display unit 200. For example, with the arrangement in Fig. 2, two defined positions are shown: a first defined position in front of the first sink 202 (i.e. where the user 206 is positioned in Fig. 2) and a second defined position in front of the second sink 204. Additional defined positions, such as one or more defined positions between the sinks 202, 204 may be provided. In other embodiments, the display unit 200 and/or the apparatus 100 may be positioned behind three or more sinks, and an area in front of each sink may correspond to a defined position of the plurality of defined positions. Of course, it will also be appreciated that the display unit 200 and/or the apparatus 100 may be used in a setting which does not involve bathrooms or sinks. In such other settings, the display unit 200 may still be viewable and useable by one or more users in different defined positions relative to the display unit.

The processor 102 is further configured to operate the display unit 200 to display user-configurable content in a first display location of a plurality of defined display locations of the display unit, based on the received signal. Thus, the display unit has a plurality of defined display locations in which content may be displayed. Each defined display location may correspond to a defined position of the plurality of defined positions of the user. An advantage of presenting content only in the defined display locations is that the content will not move around the screen in small incremental movements in response to the user making small movements. In this way, the content may be considered to be 'anchored' to particular display locations based on activity positions (e.g. positions at which it is intended that a user will perform an activity). Thus, a user viewing the display unit while performing a health treatment (e.g. brushing their teeth) may move slightly from side to side. However, the content will continue to be displayed in the same display location unless it is detected that the user is no longer present in the position corresponding to that display location. For example, if the user moves to another of the defined positions, then content may move to be displayed in a new display location corresponding to the user's new position. In this way, if a user were to move from a first sink in their bathroom to a second sink in their bathroom, then the content could be moved to a location corresponding to the second sink so that the user could continue to view the content. However, if there are no (or very few) defined display locations between the two sinks, then the content will not be seen to "float" around the display unit in such a way that renders the content difficult to view or consume by the user. By limiting the number of defined positions and defined display locations, the amount of processing required by the processor 102 can also be limited. For example, if the content were to move around the display unit in response to every movement made by the user viewing the content, then constant position detection would be required, and a large amount of processing would be needed to ensure that the content could be displayed quickly enough in each new position. However, with a limited number of defined display locations and defined positions, the user position detection can be achieved using less processing power.

In some examples, therefore, the number of defined display locations and the number of defined user positions may, preferable be kept low. For example, it may be beneficial to limit the number of defined display locations and the number of corresponding defined user positions to fewer than 8 or 16. In some examples, the number of defined display locations and the number of defined user positions may be set based on the size of the display unit, and may, for example, be limited to a maximum of three locations per meter of width of the display unit.

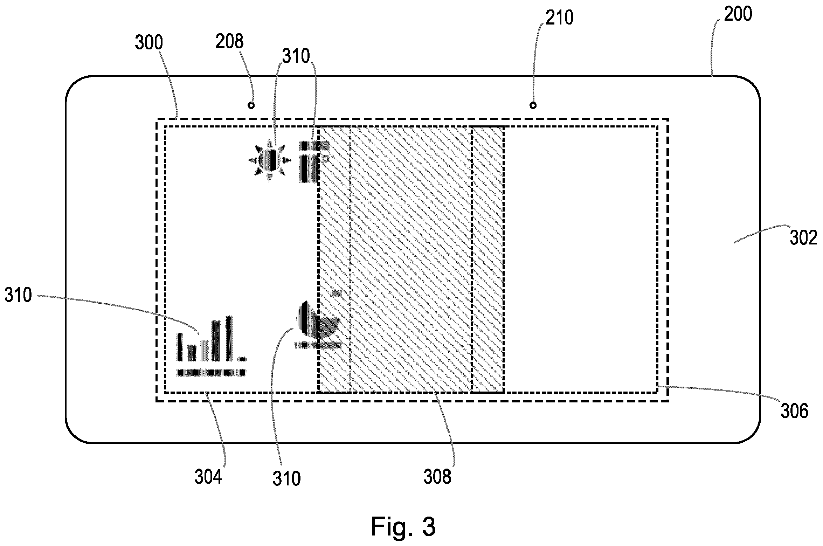

Fig. 3 is an illustration of an example of a display unit 200 according to various embodiments. The apparatus 100 may form part of the display unit 200, or might otherwise be in operative communication with the display unit such that the functions of the processor 102 may be performed in respect of the display unit. The display unit 200 shown in Fig. 3 includes the first sensor 208 and the second sensor 210 although, as noted above, one or more of the sensors may be located elsewhere, such as in the apparatus 100, or remote from the apparatus and the display unit, and configured to deliver a signal to the apparatus. The display unit 200 includes a display region 300 within which content may be displayed. In some examples, the display region 300 may extend to the edge, or substantially to the edge, of the display unit 200. In other examples, such as the example shown in Fig. 3, the display region 300 may be surrounded by a non-display region 302, within which content is not to be displayed. Other arrangements may be envisaged in which display regions 300 and non-display region 302 are arranged over and extent of a display unit 200. In an example in which the display unit 200 forms part of an interactive mirror, the non-display region 302 may be used as a mirrored or reflective region of the interactive mirror.

Within the display region 300, content may be presented in a plurality of discrete defined display locations. For example, content may be displayed in a first defined display location 304, in a second defined display location 306 and/or in a third defined display location 308. It will, of course, be apparent that any number of display locations may be defined with respect to a display unit, depending on the size and/or the particular intended use or application display unit. In the example shown in Fig. 3, the first defined display location 304 may correspond to a position relative to (e.g. aligned with) the second sink 204 of Fig. 2, and the second defined display location 306 may correspond to a position relative to (e.g. aligned with) the first sink 202 of Fig. 2. The third defined display location 308 may correspond to a position between the first and second defined display locations 304, 306 and, therefore, may correspond to a position between the first and second sinks 202, 204 of Fig. 2.

According to the example shown in Fig. 3, user-configurable content is presented in the first defined display location 304. The content to be presented may include one or more of: alphanumeric characters, including letters, words, phrases, sentences (in general, text) and numbers, images, such as diagrams, photographs, cartoons and the like, presentations, videos, animations, streamed content, the date and/or the time, content retrieved from an external source (e.g. the Internet or a connected device), such as a weather forecast, information relating to stocks and shares, information personal to a user, such as a calendar, a diary, a to-do list and the like. The content may be presented on the display unit 200 as content elements 310.

The content may be user-configurable in a number of ways. For example, a user may select one or more types of content (e.g. from the types of content listed above) to be displayed on the display unit 200. In some examples, during a setup procedure or a user registration procedure, a user may select a set of content elements 310 of particular interest to them, which may be displayed when the presence of the user is detected by the apparatus 100. The user may configure the content elements 310 in a particular arrangement, such that, by default, the content elements are presented in the same arrangement each time the presence of the user is detected. In other examples, the content may be configured by a user in some other way. The user configuration of the content elements 310 (e.g. the selection of the content elements to be displayed and the arrangement of the content elements) may be stored in a storage means, such as the memory 106, and associated with the user, for example in a user profile. In this way, each user of the display unit 200 or the apparatus 100 may have content displayed according to their own preferences.

Thus, according to some embodiments, the user-configurable content may comprise a plurality of content elements arranged in a defined arrangement. The arrangement may, for example, be selected by a user, based on user preferences regarding how the user would like to have the content presented. The processor 102 may be configured to operate the display unit to display the user-configurable content in the defined arrangement.

Thus, content can be displayed at defined 'anchored' locations corresponding to particular positions in the environment surrounding the display unit. For example, if a user were positioned within a region surrounding a first position, displayed content may be anchored to a first display location, and if the user were positioned within a region surrounding a second position, displayed content may be anchored to a second display location.

As noted above, the processor 102 operates the display unit to display the user-configurable content in a first display location (e.g. the first defined display location 304) based on the signal received by the processor. Thus, the apparatus 100 may further comprise one or more sensors (e.g. the sensors 208 and 210) for detecting the position of the user in the first position of the plurality of defined positions relative to the display unit 200. The processor 102 may be configured to receive the signal indicative of the position of the user from the one or more sensors. Thus, any of the sensors may detect the presence of user and provide a signal indicative of the position of the user to the processor 102. The one or more sensors may comprise any type of sensor capable of detecting the presence of a user. In some examples, the sensor(s) may comprise one or more of an ultrasonic sensor, an infrared reflective sensor or a passive thermal sensor, such as a passive infrared (PIR) thermal sensor. For example, a passive infrared thermal sensor may detect heat from the body of the user when the user is in the first position (e.g. standing in front of the second sink 204 and within detection range of the first sensor 208). An ultrasonic sensor may detect the presence of the user by detecting a reflection of an ultrasonic signal from a user, for example. In other examples, a pressure detector may be used as a sensor. For example, a pressure detection element (e.g. a pressure pad) may be positioned on the floor in front of one or more of the plurality of defined positions relative to the display unit 200. When a user steps onto the pressure pad, it may be determined that the user is in one of the defined positions.

In some embodiments, at least one sensor of the one or more sensors may comprise a camera or an image sensor. While, in some embodiments, a high-resolution camera may be used, it may be sufficient to use a low-resolution camera, particularly when detail in the image captured by the camera is not important. Examples, one or more of the sensors may comprise a camera module that is capable of performing image processing (e.g. user detection) but does not export the captured image. Such a camera module may be advantageous in settings where privacy is of particular importance (e.g. in a bathroom setting).

Whichever sensor or sensors are used to detect the presence of a user, the processor 102 may, in some embodiments, be further configured to determine an identity of the user based on the received signal. For example, they sensor may receive data from which the identity of the user can be determined, and this data may be provided to the processor 102 so that the user can be identified. In one example, when the sensor comprises a camera, facial detection techniques may be used to identify the user. By determining the identity of a user, the processor 102 may present user-specific content to the user. For example, if the processor 102 receives a signal indicating that a particular user is positioned in front of the first defined display location 304 of the display unit 200, then the processor may operate the display unit to display content relevant to specific to that particular user in the first defined display location 304.

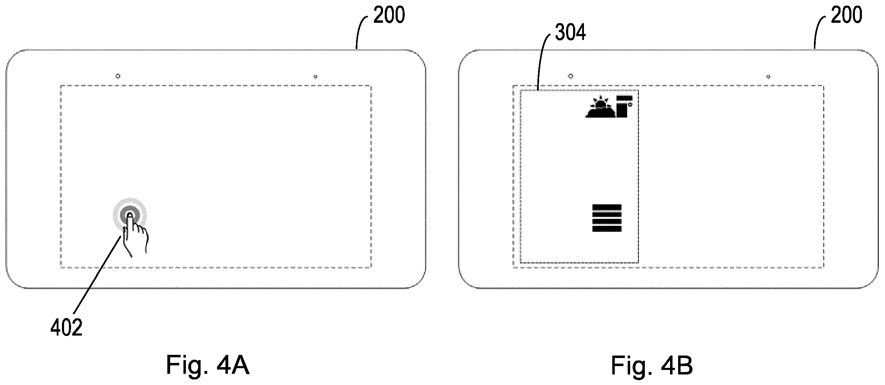

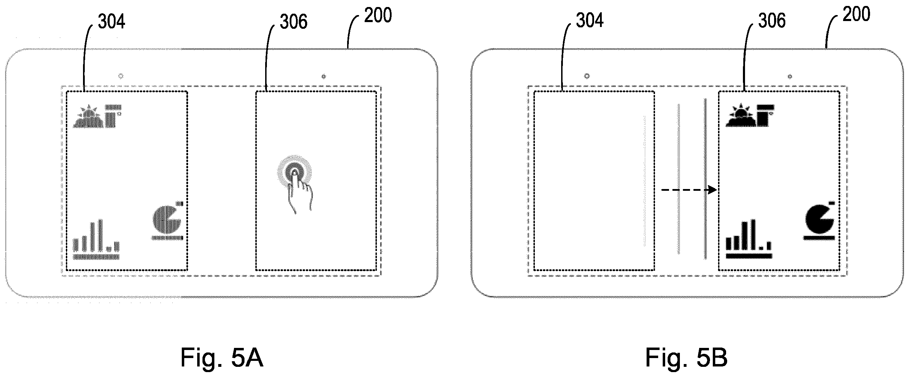

In some embodiments, at least one sensor of the one or more sensors may comprise a touch-sensitive element associated with the display unit 200. For example, at least a portion of the display unit 200 may comprise a touch-sensitive surface, such as a touch screen, capable of detecting a touch, for example by the finger of the user. Fig. 4A and Fig. 4B show examples of the display unit 200 including a touch-sensitive element or surface. Fig. 4A shows the display unit 200 in a "sleep" mode, in which no content is displayed on the display unit. A user may touch the touch-sensitive surface of the display unit 200, for example at the touch location 402, and this touch event may cause the processor to display content in a display location based on the location of the touch event. In some embodiments, the receipt of a touch event by the touch-sensitive surface of the display unit 200 may cause the display unit to "wake up", or exit the "sleep" mode. Thus, the processor 102 may be configured to operate the display unit to display user-configurable content in the first display location of the plurality of defined display locations of the display unit 200, based on a touch event received from the user by the touch-sensitive element. For example, if a touch event is detected in the first defined display location 304, then content may be displayed in the first defined display location whereas, if a touch event is detected in the second defined display location 306, then the content may be displayed in the second defined display location. Figs. 5A and 5B show further examples of the display unit 200 having a first defined display location 304 and a second defined display location 306. In Fig. 5A, content is displayed in a first defined display location 304. If the processor 102 detects a touch event from a user in a different defined display location of the display unit 200 (e.g. in the second defined display location 306), then the processor may cause the content to be displayed in the different defined display location. As shown in Fig. 5B, the content may be moved from the first defined display location 304 to the second defined display location 306. In one example, the content may move all transition smoothly across the display unit 200 from the first defined display location 304 to the second defined display location 306.

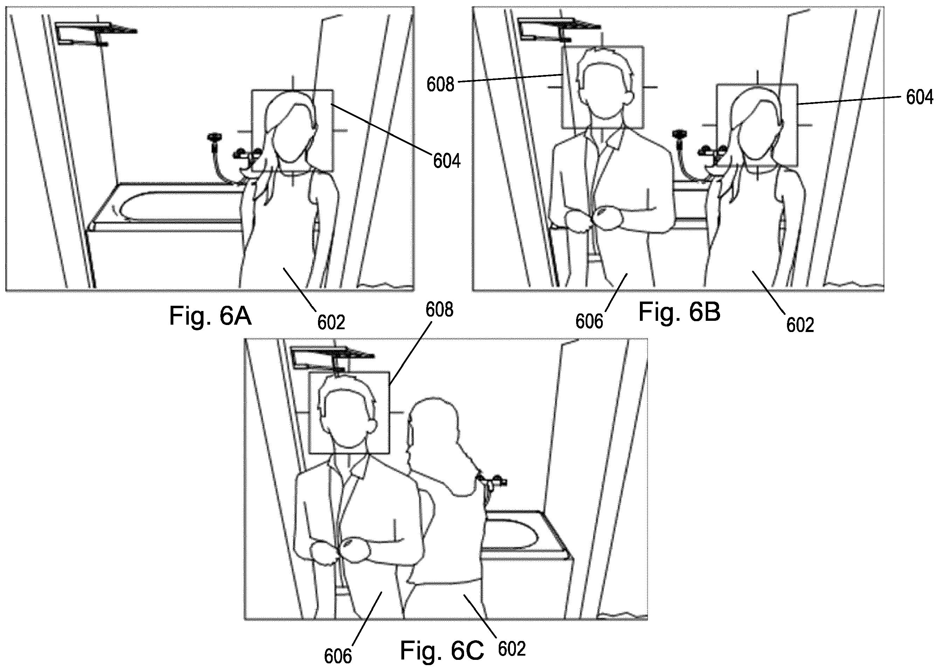

Figs. 6A, 6B and 6C are illustrations of examples of scenes that may be observed by the one or more sensors, such as cameras. In other words, the views in Figs. 6A, 6B and 6C represent the view from the display unit 200 towards the user(s). In Fig. 6A, a female user 602 is seen facing the sensor (and the display unit 200) in a position approximately corresponding to the second sink 204. One or more of the sensors may detect the female user 602 and, if the sensor is capable of capturing data sufficient for identifying user, then the processor 102 may determine the identity of the user. In the example shown, the head of the female user 602 is located and identified using a box 604. In other examples, an alternative means for highlighting or identifying the position of the user's head or other body part may be used. In Fig. 6B, the female user 602 is shown facing the sensor in the same position as in Fig. 6A and, in addition, a male user 606 is shown facing the sensor in a position approximately corresponding to the first sink 202. The head of the male user 606 is located and indicated using a box 608. In Fig. 6C, the male user 606 remains in the position in which he is shown in Fig. 6B, but the female user 602 is shown in a position in which she is facing away from the sensors/display unit. In other words, the face of the female user 602 is not visible to the sensors, implying that the female user is not viewing the display unit 200. In this example, since the female user 602 is facing away from the display unit 200, her head is no longer identified using the box 604.

Thus, in some embodiments, the processor 102 may be configured to determine, based on the received signal, that the user is facing the display unit 200. The processor 102 may be configured to operate the display unit to display the user-configurable content in the first display location of the plurality of defined display locations of the display unit 200, responsive to determining that the user is facing the display unit. In this way, if the processor 102 determines that a user is not viewing the display unit 200, then content is not presented to them.

It will be apparent from the above discussion that the apparatus 100 and/or the display unit 200 disclosed herein may be used to present content to multiple users concurrently. Thus, in the example of the female user 602 and male user 606 shown in Fig. 6B, the processor 102 may present content to the female user in the first defined display location 304 and separate content to the male user in the second defined display location 306.

Thus, the user may comprise a first user, and the received signal may comprise a first signal. The processor 102 may be configured to receive a second signal indicative of a position of a second user in a second position of the plurality of defined positions relative to the display unit 200. The processor 102 may be further configured to operate the display unit 200 to display user-configurable content in a second display location of the plurality of defined display locations of the display unit, based on the received second signal. In this way, each user may be able to view content in a convenient and appropriate manner based on their position relative to the display unit. In some embodiments, the content presented to the multiple users may be the same while, in other embodiments, different content may be presented to one or more users. As discussed above, user-specific content may be presented to a user, particularly in examples where the identity of the user can be determined using the sensor(s).

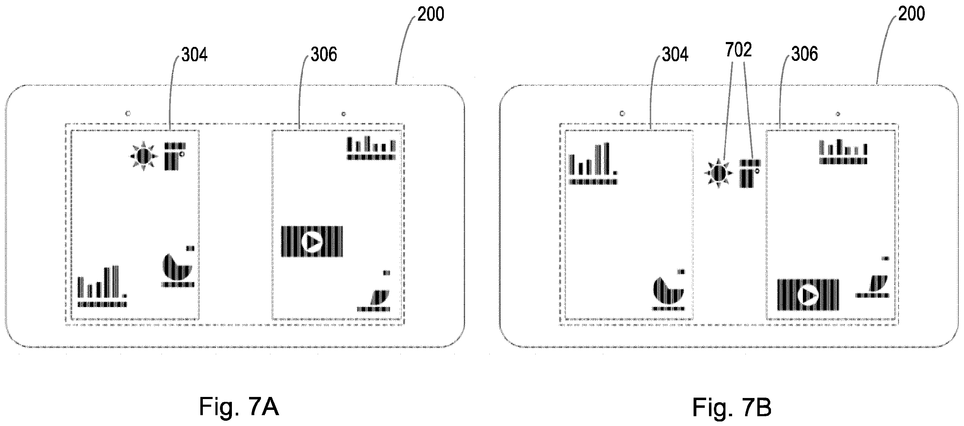

Figs. 7A and 7B show examples of the display unit 200 having a first defined display location 304 and a second defined display location 306. In Fig. 7A, first content is displayed in the first defined display location 304 (e.g. for a first detected user) and second content is displayed in the second defined display location 306 (e.g. for a second detected user). In this example, the second content is different to the first content. For example, a different subset of content elements 310 may be displayed in the first defined display location 304 than the subset of content elements 310 displayed in the second defined display location 306. In the example shown in Fig. 7B, different content elements are again shown in the first defined display location 304 and the second defined display location 306. However, in this example, some content elements 702 are displayed in a region between the first and second defined display locations 304, 306. For example, the content elements 702 may be displayed in the third defined display location 308. In this way, content elements that are generic, non-user specific, or of interest or relevance to both users (e.g. based on the user profiles) may be presented in a region of the display unit 200 that can be viewed easily by both users when two users are detected by the sensors.

The defined display locations of the display unit 200 in which content is to be displayed to one or more users may be set or defined according to a standard arrangement. For example, a display unit 200 may have two defined display locations: a first at a first side or end of the display unit, and a second at a second side or end of the display unit (e.g. as shown for example in Fig. 7A). The defined display locations may be set during a manufacturing process, or prior to installation of the display unit 200. For example, details of the defined display locations may be stored in a storage device accessible by the processor 102, such as the memory 106. In other examples, a non-standard set of defined display locations corresponding to positions which a user may view the display unit may be assigned for a particular display unit 200. The locations of the defined display location may not be known or apparent until the display unit 200 is installed in the location in which it is to be used. For example, a display unit 200 may be installed in a bathroom setting in which three sinks are arranged side-by-side. In such a setting, it may be desirable to assign three separate defined display locations, one for each sink. Thus, during installation of the display unit 200, an installer may set the defined display locations and/or the defined user positions (e.g. using a computing device or by identifying the locations on the display unit itself for example by touching the relevant locations of the display unit), and provide the defined display locations and/or the defined user positions so that they are accessible by the processor 102. For example, the installer may save the defined display locations/user positions in the memory 106.

Thus, the processor 102 may be configured to receive data indicative of the plurality of defined positions relative to the display unit 200. As discussed above, the data may be received from a user input, such as an input provided by an installer of the display unit 200. The processor 102 may be further configured to store the data in a storage device (e.g. the memory 106) associated with and accessible by the processor. The process of providing the data indicative of the plurality of defined positions may be considered to be a configuration or calibration process.

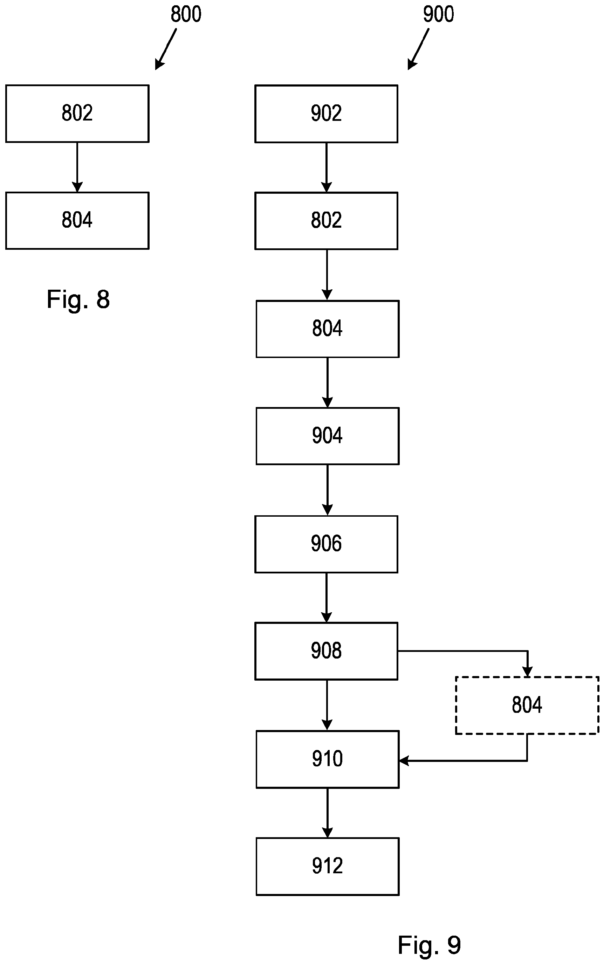

According to a second aspect, embodiments disclosed herein provide a method for displaying content on a display unit, such as the display unit 200. Fig. 8 is a flowchart of an example of such a method 800. The method 800 comprises, at step 802, receiving, by a processor (e.g. the processor 102), a signal indicative of a position of a user in a first position of a plurality of defined positions relative to the display unit. At step 804, the method 800 comprises displaying user-configurable content in a first display location of a plurality of defined display locations of the display unit, based on the received signal. The method 800 may, for example, be performed using the processor 102 and/or the apparatus 100 disclosed above.

Fig. 9 is a flowchart of an example of a further method 900 for displaying content on a display unit. The method 900 may include steps 802 and 804 discussed above. In the method 900, prior to performing steps 802 and 804, the above-described configuration or calibration process may be performed. Thus, the method 900 may further comprise, at step 902, configuring the display unit 200. The configuring of step 902 may be formed by receiving, by a processor 102, data indicative of the plurality of defined positions relative to the display; and storing the data in a storage device (e.g. the memory 106) associated with and accessible by the processor 102.

The method 900 may further comprise, at step 904, receiving, by a processor (e.g. the processor 102), a further signal indicative of the position of the user in a second position of the plurality of defined positions relative to the display unit. At step 906, the method 900 may further comprise transitioning the displayed user-configurable content from the first display location of the plurality of defined display locations of the display unit 200 to a second display location of the plurality of defined display locations of the display unit. For example, the transitioning (step 906) may be performed in the manner described above with reference to Figs. 5A and 5B.

At step 908, the method 900 may further comprise identifying the user based on the received signal. For example, in embodiments in which the sensor comprises a camera, facial detection techniques may be used to determine the identity of the user. The displaying (step 804) may comprise displaying user-configurable content relevant to the identified user.

In some embodiments, the user may comprise a first user, and the received signal may comprise a first signal. The method 900 may further comprise, at step 910, receiving, by a processor (e.g. the processor 102), a second signal indicative of a position of a second user in a second position of the plurality of defined positions relative to the display unit. At step 912, the method 900 may further comprise displaying user-configurable content in a second display location of the plurality of defined display locations of the display unit, based on the received second signal. In this way, multiple users may concurrently use the same display unit 200, and content (either the same content or different, user-specific content) may be presented to each user in a convenient manner.

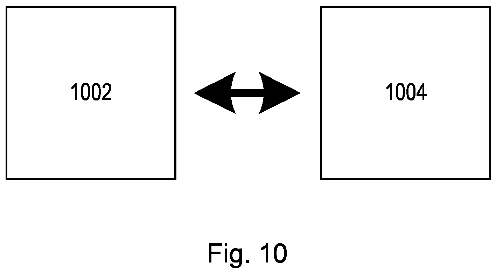

According to a third aspect, embodiments disclosed herein provide a computer program product. Fig. 10 is a simplified schematic illustration of a processor 1002 in communication with a machine-readable medium 1004. According to various embodiments, a computer program product comprises a non-transitory machine-readable medium 1004, the machine-readable medium having machine-readable code embodied therein, the machine-readable code being configured such that, on execution by a suitable computer or processor 1002, the computer or processor is caused to perform steps of the methods 800, 900 disclosed herein.

The processor 102, 1002 can comprise one or more processors, processing units, multi-core processors or modules that are configured or programmed to control the apparatus 100 in the manner described herein. In particular implementations, the processor 102, 1002 can comprise a plurality of software and/or hardware modules that are each configured to perform, or are for performing, individual or multiple steps of the method described herein.

The term "module", as used herein is intended to include a hardware component, such as a processor or a component of a processor configured to perform a particular function, or a software component, such as a set of instruction data that has a particular function when executed by a processor.

It will be appreciated that the embodiments of the invention also apply to computer programs, particularly computer programs on or in a carrier, adapted to put the invention into practice. The program may be in the form of a source code, an object code, a code intermediate source and an object code such as in a partially compiled form, or in any other form suitable for use in the implementation of the method according to embodiments of the invention. It will also be appreciated that such a program may have many different architectural designs. For example, a program code implementing the functionality of the method or system according to the invention may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other. An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. An apparatus (100) for displaying content on a display unit, the apparatus comprising:
a processor (102) configured to:
receive a signal indicative of a position of a user in a first position of a plurality of defined positions relative to the display unit; and
operate the display unit to display user-configurable content in a first display location of a plurality of defined display locations of the display unit, based on the received signal.

2. An apparatus (100) according to claim 1, wherein the processor (102) is further configured to determine an identity of the user based on the received signal.

3. An apparatus (100) according to claim 1 or claim 2, further comprising:
one or more sensors (208, 210) for detecting the position of the user in the first position of the plurality of defined positions relative to the display unit;
wherein the processor (102) is configured to receive the signal indicative of the position of the user from the one or more sensors.

4. An apparatus (100) according to claim 3, wherein at least one sensor of the one or more sensors (208, 210) comprises a camera.

5. An apparatus (100) according to claim 3 or claim 4, wherein at least one sensor of the one or more sensors (208, 210) comprises a touch-sensitive element associated with the display unit; and
wherein the processor (102) is configured to operate the display unit to display user-configurable content in the first display location of the plurality of defined display locations of the display unit, based on a touch event received from the user by the touch-sensitive element.

6. An apparatus (100) according to any of the preceding claims, wherein the processor (102) is configured to:
determine, based on the received signal, that the user is facing the display unit; and
operate the display unit to display the user-configurable content in the first display location of the plurality of defined display locations of the display unit, responsive to determining that the user is facing the display unit.

7. An apparatus (100) according to any of the preceding claims, wherein the processor (102) is configured to:
receive data indicative of the plurality of defined positions relative to the display unit; and
store the data in a storage device associated with and accessible by the processor.

8. An apparatus (100) according to any of the preceding claims, wherein the user comprises a first user, wherein the received signal comprises a first signal, and wherein the processor (102) is configured to:
receive a second signal indicative of a position of a second user in a second position of the plurality of defined positions relative to the display unit; and
operate the display unit to display user-configurable content in a second display location of the plurality of defined display locations of the display unit, based on the received second signal.

9. An apparatus (100) according to any of the preceding claims, wherein the apparatus comprises an interactive mirror.

10. A method (800) for displaying content on a display unit, the method comprising:
receiving (802), by a processor, a signal indicative of a position of a user in a first position of a plurality of defined positions relative to the display unit; and
displaying (804) user-configurable content in a first display location of a plurality of defined display locations of the display unit, based on the received signal.

11. A method (800, 900) according to claim 10, further comprising:
receiving (904), by a processor, a further signal indicative of the position of the user in a second position of the plurality of defined positions relative to the display unit; and
transitioning (906) the displayed user-configurable content from the first display location of the plurality of defined display locations of the display unit to a second display location of the plurality of defined display locations of the display unit.

12. A method (800, 900) according to claim 10 or claim 11, further comprising:
identifying (908) the user based on the received signal;
wherein said displaying comprises displaying user-configurable content relevant to the identified user.

13. A method (800, 900) according to any of claims 10 to 12, further comprising:
configuring (902) the display unit, said configuring comprising:
receiving, by a processor, data indicative of the plurality of defined positions relative to the display; and
storing the data in a storage device associated with and accessible by the processor.

14. A method (800) according to any of claims 10 to 13, wherein the user comprises a first user, wherein the received signal comprises a first signal, and wherein the method further comprises:
receiving (910), by a processor, a second signal indicative of a position of a second user in a second position of the plurality of defined positions relative to the display unit; and
displaying (912) user-configurable content in a second display location of the plurality of defined display locations of the display unit, based on the received second signal.

15. A computer program product comprising a non-transitory machine-readable medium (1004), the machine-readable medium having machine-readable code embodied therein, the machine-readable code being configured such that, on execution by a suitable computer or processor (102, 1002), the computer or processor is caused to perform the method of any of claims 10 to 14.
